# EUROPÄISCHE PATENTSCHRIFT

(11) **EP 1 313 981 B1**
(45) Veröffentlichungstag und Bekanntmachung des Hinweises auf die Patenterteilung: **20.10.2004**
(21) Anmeldenummer: 01955117.5
(22) Anmeldetag: 03.08.2001
(51) Int. Cl.: F16L 37/092

(54) **VERBINDUNGSEINRICHTUNG FÜR SCHUTZROHRE**
COUPLING DEVICE FOR CABLE CONDUITS
DISPOSITIF D'ASSEMBLAGE POUR TUBES PROTECTEURS

(30) Priorität: 22.08.2000 AT 6062000 U
(43) Veröffentlichungstag der Anmeldung: 28.05.2003
(73) Patentinhaber: E. Hawle Armaturenwerke GmbH, 4840 Vöcklabruck (AT)
(72) Erfinder: SALFINGER, Manfred, A-4651 Stadl-Paura (AT); POHN, Franz, Johann, A-4840 Vöcklabruck (AT)
(74) Vertreter: Secklehner, Günter
(86) Internationale Anmeldenummer: PCT/AT2001/000261
(87) Internationale Veröffentlichungsnummer: WO 2002/016817

(56) Entgegenhaltungen:
- EP-A- 0 083 135
- FR-A- 2 337 849
- US-A- 5 921 588

## Beschreibung

Die Erfindung betrifft eine Verbindungseinrichtung gemäß dem Oberbegriff des Anspruches 1.

Zur Absicherung vor Beschädigungen werden Datenleitungen, Kabel etc. vielfach in Schutzrohren verlegt, wobei an den Stoßstellen die Schutzrohre mit entsprechenden Verbindungseinrichtungen zur Bildung eines durchgehenden Rohrstranges lösbar gekuppelt werden. Derartige Verbindungseinrichtungen sind von Druckleitungen für ein strömendes Medium, z.B. Gas, Luft, Wasser etc. bekannt und sind diese infolge des üblicherweise hohen Druckes des Mediums entsprechend aufwendig konzipiert.

In der US 5,921,588 A (dem Oberbegriff des Anspruchs 1 entsprechend) wird eine Kupplung bzw. Verbindungseinrichtung für Rohre bestehend aus einem die Rohrenden umfassbaren Mittelteil und mit diesem Mittelteil an entgegengesetzten Stirnendbereichen bereichsweise überlappenden und die Rohrenden aufnehmenden Verbindungsmuffen beschrieben. Zwischen den äußeren Oberflächen der Rohrenden und der Innenseite des Mittelteils bzw. der Verbindungsmuffe sind an der äußeren Oberfläche der Rohrenden anliegend ein Klemmring, ein Dichtelement und eine Manschette angeordnet, sodaß die Dichtelemente zwischen der äußeren Oberfläche der Rohrenden und der inneren Oberfläche des Mittelteils, d.h. der, der äußeren Oberfläche der Rohrenden zugewandten Oberfläche des Mittelteils, in Richtung der Längserstreckung des Mittelteils bewegungsfest gehaltert angeordnet sind. Dadurch wird der Innenraum des Rohrleitungsstranges zur Umgebung hin abgedichtet.

Aus der EP 0 083 135 A ist eine Anschlußkupplung in Form einer Überwurfverschraubung für den dichtenden Anschluß eines Rohres an einen Endadapter einer Abgabestelle für ein Medium bekannt. Ein das anzuschließende Rohr an seinem äußeren Umfang umfassender Dichtungsring wird mittels eines zwischen der Überwurfverschraubung und dem Endadapter zusätzlich eingelegten Stützringes formschlüssig im Endadapter positioniert.

Das Dokument FR 2 337 849 A beschreibt eine Verbindungseinrichtung für im Bereich einer Stoßstelle koaxial gegenüberliegend zu verbindender Rohrenden, bestehend aus einem rohrförmigen Mittelteil und mit zwei schraub- oder schnappbar mit dem Mittelteil verbindbare die zu verbindenden Rohre umfassende Anschlußadapter und mit von diesen am Mittelteil positioniert gehaltenen am Umfang der zu verbindenden Rohre anliegenden Dichtungsringen.

Aufgabe der Erfindung ist es, eine einfache Verbindungseinrichtung zu schaffen, die eine verläßliche Abdichtung sowohl gegen das Eindringen von Staub, Schmutz oder Feuchtigkeit wie auch eines inneren Überdruckes gewährleistet und kostengünstig zu fertigen ist.

Diese Aufgabe der Erfindung wird durch die im Kennzeichenteil des Anspruches 1 wiedergegebenen Merkmale erreicht. Der überraschende Vorteil dabei ist, daß eine exakte Positionsabsicherung bei der Montage der zusammenwirkenden Bauteile erreicht wird und damit die Dichtwirkung, aber auch eine einwandfreie konzentrische Ausrichtung für eine störungsfreie Installation der von den Schutzrohren aufzunehmenden Datenleitungen gegeben ist.

Vorteilhafte Ausbildungen sind weiters in den Ansprüchen 2 bis 3 beschrieben, wodurch die Verbindungseinrichtung an unterschiedliche Anforderungen entsprechend angepaßt werden kann.

Eine weitere vorteilhafte Ausbildung beschreibt der Anspruch 4, weil dadurch die Anzahl der erforderlichen Einzelteile reduziert werden kann, wodurch sich Kostenersparungen durch verringerte Lagerhaltung, aber auch durch die vereinfachte Montage ergeben und darüber hinaus etwaige Fehlermöglichkeiten bei der Montage vermieden werden.

Gemäß der vorteilhaften Ausbildung, wie im Anspruch 5 beschrieben, werden die Haltekräfte in der Verbindungseinrichtung zur Erzielung bester Dichtwirkung minimiert.

Es sind aber auch Ausbildungen nach den Ansprüchen 6 und 7 vorteilhaft, wodurch die Anwendung handelsüblicher und damit kostengünstiger Dichtelemente erreicht wird.

Die Fertigung vereinfachende Ausbildungen sind in den Ansprüchen 8 und 9 gekennzeichnet, da derartige Nuten zur Aufnahme der Dichtelemente leicht zu realisierende Lösungen darstellen.

Durch die vorteilhaften Weiterbildungen, wie in den Ansprüchen 10 bis 14 beschrieben, lassen sich unterschiedliche, den jeweiligen Einsatzbedingungen anpaßbare Kupplungsanordnungen ausbilden.

Es ist aber auch eine Ausbildung nach Anspruch 15 vorteilhaft, wodurch besonders hohe Haltekräfte für eine lösbare Kupplungsanordnung erreicht werden.

Gemäß der Weiterbildung, wie im Anspruch 16 beschrieben, besteht auch die Möglichkeit, eine derartige Verbindungseinrichtung unlösbar zu gestalten.

Im Anspruch 17 wird eine weitere vorteilhafte Ausbildung der Kupplungsanordnung gekennzeichnet, durch die hohe Haltekräfte erreicht werden und durch die Verwendung unabhängiger Haltefedern die Werkzeuge zur Herstellung der bevorzugt im Kunststoff-Spritzverfahren hergestellten Teile vereinfacht und damit diese kostengünstiger werden.

Gemäß der weiteren vorteilhaften Ausbildung, wie in den Ansprüchen 18 bis 20 beschrieben, können die auf derartige Rohrstränge einwirkenden Zugbelastungen, ohne daß eine unbeabsichtigte Trennung der Verbindung eintritt, aufgenommen werden.

Möglich ist auch eine Ausbildung nach Anspruch 21, wodurch eine exakte mittige Anordnung der Verbindungseinrichtung über der Stoßstelle von zu verbindenden Rohren erreicht wird.

Schließlich sind aber auch die Ausbildungen nach den Ansprüchen 22 bis 24 vorteilhaft, wodurch die die Verbindungseinrichtung bildenden Einzelelemente kostengünstig in Großserienfertigung herstellbar sind.

Die Erfindung wird im nachfolgenden anhand der in den Zeichnungen dargestellten Ausführungsbeispiele näher erläutert.

Es zeigen:
- Fig. 1: die erfindungsgemäße Verbindungseinrichtung, geschnitten gemäß den Linien I-I in Fig.2;
- Fig. 2: die Verbindungseinrichtung, geschnitten gemäß den Linien II-II in Fig. 1;
- Fig. 3: eine schematische Darstellung der erfindungsgemäßen Verbindungseinrichtung für eine mögliche lösbare Ausbildung;
- Fig. 4: eine andere Ausbildung einer erfindungsgemäßen Verbindungseinrichtung, geschnitten;
- Fig. 5: eine weitere Ausbildung einer erfindungsgemäßen Verbindungseinrichtung, geschnitten.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

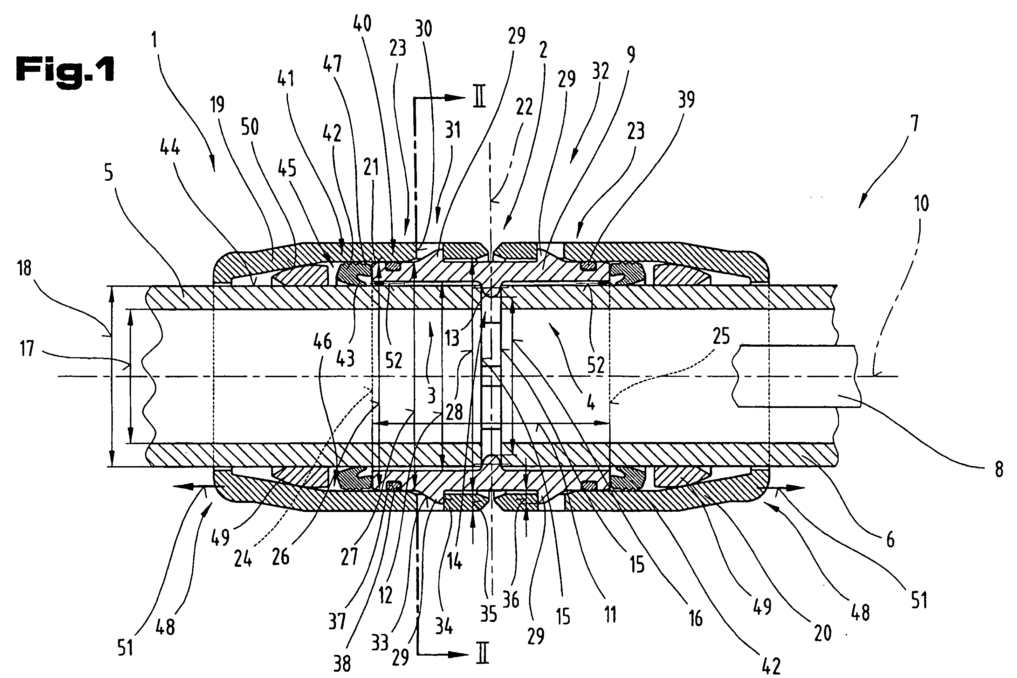

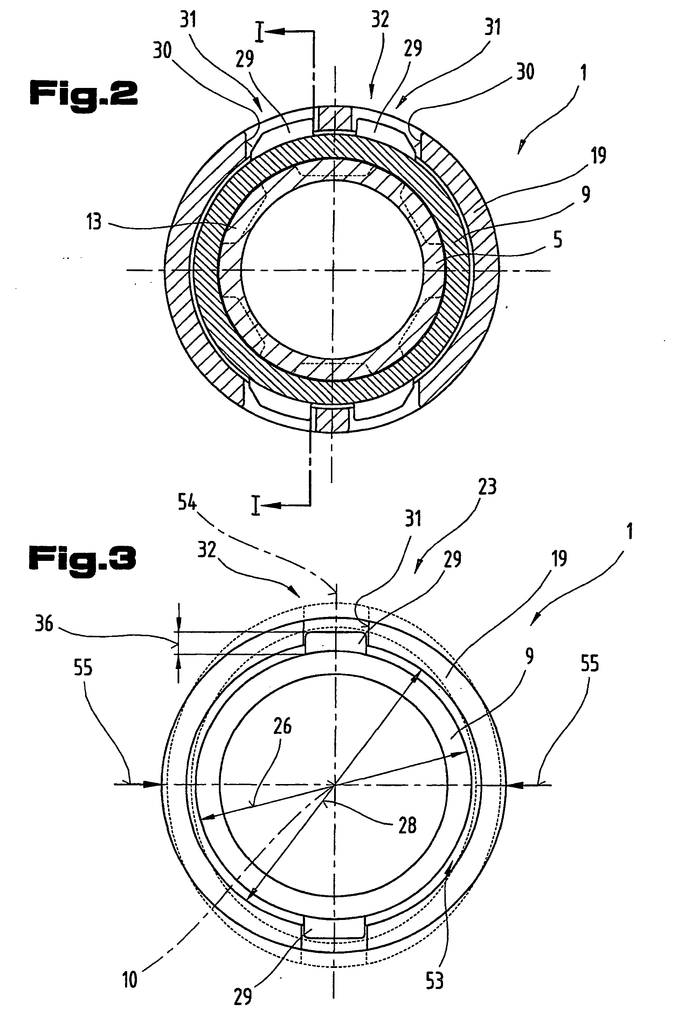

In den Fig. 1 und 2 ist eine Verbindungseinrichtung 1 für im Bereich einer Stoßstelle 2 koaxial gegenüberliegend zu verbindenden Rohrenden 3, 4 von Schutzrohren 5, 6 gezeigt. Derartige Schutzrohre 5, 6 werden zur Herstellung eines Rohrleitungsstranges 7 mittels der Verbindungseinrichtung 1 gekuppelt, um innerhalb dieses Rohrleitungsstranges 7 insbesondere Datenleitungen, Lichtleiter, hochempfindliche Kabel geschützt aufzunehmen. Die Verbindungseinrichtung 1 nimmt dabei die Schutzrohre 5, 6 an den Rohrenden 3, 4 auf und verbindet diese dauerhaft gegen axial auftretende Zugkräfte und verhindert das Eindringen von Staub, Schmutz und Feuchtigkeit und bietet auch eine Abdichtung zum vorübergehenden Aufbau eines Überdruckes im Rohrleitungsstrang 7, wobei der Überdruck zum sogenannten Einschießen von Datenleitungen 8 vorübergehend im Inneren des Rohrleitungsstranges 7 hergestellt wird.

Die Verbindungseinrichtung 1 besteht im wesentlichen aus einem in etwa rohrförmigen Mittelteil 9, der die Rohrenden 3, 4 koaxial umfaßt. In etwa im Mittel einer in Richtung einer Längsmittelachse 10 verlaufenden Länge 11 sind bereichsweise einen Innendurchmesser 12 in Richtung der Längsmittelachse überragende wulstförmige Vorsprünge 13, die einen Rohranschlag 14 für Stirnflächen 15 der Rohrenden 3, 4 ausbilden, angeordnet, wobei ein freier Durchmesser 16 geringfügig größer ist als ein innerer Durchmesser 17 der Schutzrohre 5, 6. Der Innendurchmesser 12 des Mittelteils 9 ist geringfügig größer als ein Außendurchmesser 18 der Schutzrohre 5, 6.

Weiters werden die Rohrenden 3, 4 von Verbindungsmuffen 19, 20 umfaßt, die den Mittelteil 9 an einem äußeren Umfang 21 umfassen und in Richtung einer auf die Längsmittelachse 10 senkrecht angeordneten Querebene 22 etwa um die halbe Länge 11 des Mittelteils 9 überlappen. Ein Überlappungsbereich 23 zwischen den Verbindungsmuffen 19, 20 und dem Mittelteil 9 ist dabei so ausgebildet, daß benachbart zu Stirnendbereichen 24, 25 des Mittelteils 9 ein äußerer Durchmesser 26 des Mittelteils 9 in etwa gleich ist einem inneren Durchmesser 27 der Verbindungsmuffen 19, 20. In einem weiteren, der Querebene 22 zugewandten Bereich weisen die Verbindungsmuffen 19, 20 einen inneren Durchmesser 28 auf, der größer ist als der äußere Durchmesser 26 des Mittelteils 9. In diesem Bereich sind in bezug auf die Längsmittelachse 10 diametral gegenüberliegende, den äußeren Durchmesser 27 überragende Rastnasen 29 in bezug auf die Querebene 22 symmetrisch gegenüberliegend am Mittelteil 9 angeordnet, insbesondere einstückig angeformt. Diese bilden mit in den Verbindungsmuffen 19, 20 vorgesehenen Durchbrüchen 30 Aufnahmen 31 für die Rastnasen 29 und insgesamt eine bevorzugt nicht lösbare Rastverbindung 32 zur Fixierung der Verbindungsmuffen 19, 20 mit dem Mittelteil 9. Die Rastnasen 29 bilden dabei eine in Richtung der Querebene 22 winkelig ansteigend verlaufende Einführfläche 33 und weiters eine parallel zur Querebene 22 verlaufende Rückhaltefläche 34 aus, an der im verrasteten Zustand die Verbindungsmuffen 19, 20 in den Durchbrüchen 30 in einem Teilbereich einer Wanddicke 35 abgestützt sind. Eine Höhe 36 der Rastnasen 29 entspricht in etwa der Wanddicke 35, wobei zu berücksichtigen ist, daß im Bereich der Rastnasen 29 der innere Durchmesser 28 der Verbindungsmuffen 19, 20 kleiner ist als der äußere Durchmesser 27 des Mittelteils 9 und damit ein umlaufender Spalt zwischen dem Mittelteil 9 und den Verbindungsmuffen 19, 20 besteht.

Wie der Fig. 2 besser zu entnehmen, sind zur Erhöhung der Haltekräfte der Rastverbindung 32 am Umfang des Mittelteils 9 paarweise Rastnasen 29 angeordnet, wobei jeder Rastnase 29 eine Aufnahme 31 zugeordnet ist. Die Verbindungseinrichtung 1 ist jedoch nicht auf diese Anzahl von Rastnasen 29 eingeschränkt. Es sind weiters Ausbildungen mit einer größeren Anzahl von Rastnasen 29 möglich die z. B. gleichmäßig über den Umfang des Mittelteils 9 verteilt sind. Derartige Ausbildungen sind insbesondere bei größeren Abmessungen von Verbindungseinrichtungen 1 zweckmäßig.

Im Überlappungsbereich 23 zwischen dem Mittelteil 9 und den Verbindungsmuffen 19, 20 sind in den Stirnendbereichen 24, 25 nutförmige Vertiefungen 37 im Mittelteil 9 angeordnet, in denen elastisch verformbare ringförmige Dichtelemente 38, z.B. O-Ringe 39, eingelegt und in den nutförmigen Vertiefungen 37 in axialer Richtung bewegungsfest gehaltert sind. Diese Dichtelemente 38 bilden damit eine Dichtanordnung 40 zur Verhinderung des Eindringens von Staub, Schmutz, Feuchtigkeit aus wie auch eine Abdichtung für einen inneren Überdruck im Rohrleitungsstrang 7 erreicht wird.

Die Dichtelemente 38 sind somit jeweils zwischen einer inneren Oberfläche 46 der Verbindungsmuffen 19, 20 und einer, einer äußeren Oberfläche 44 der Rohrenden 3, 4 abgewandten Oberfläche des Mittelteils 9 angeordnet.

Im gezeigten Ausführungsbeispiel wird eine weitere Dichtanordnung 41 durch sogenannte Lippendichtringe 42 gebildet, die die Rohrenden 3, 4 umfassend und mit Dichtlippen 43 an einer äußeren Oberfläche 44 der Rohrenden 3, 4 dichtend anliegen und unmittelbar an den Stirnendbereichen 24, 25 des Mittelteils 9 anliegen und einen ringförmigen Zwischenraum 45 zwischen der Oberfläche 44 der Rohrenden 3, 4 und einer inneren Oberfläche 46 der Verbindungsmuffen 19, 20 überbrücken. Eine äußere Umfangsfläche 47 der Lippendichtringe 42 liegt dabei dichtend an der inneren Oberfläche 46 der Verbindungsmuffen 19, 20 an. In weiteren, von der Querebene 22 distanzierten Endbereichen 48 verläuft die innere Oberfläche 46 der Verbindungsmuffen 19, 20 entsprechend einer sich verjüngenden Kegelmantelfläche, wodurch der Zwischenraum 45 konisch verjüngend ausgebildet ist. In diesem Bereich sind ringförmige Rückhalteelemente 49 die Rohrenden 3, 4 umfassend angeordnet, die bevorzugt zur leichteren Aufbringung auf die Rohrenden 3, 4 geschlitzt ausgebildet sind und an einer den Rohrenden 3, 4 zugewandten inneren Oberfläche mit haken- oder gewindeförmigen Vorsprüngen versehen sind. Eine äußere Oberfläche 50 der Rückhalteelemente 48 ist nach einer bevorzugten Ausführung ballig bzw. in Form der Oberfläche einer Kugelkalotte ausgebildet wodurch bei Auftreten einer axialen Kraft in Richtung eines Pfeiles 51 eine Preßkraft der Rückhalteelemente 48 auf die Rohrenden 3, 4 in Richtung der Längsmittelachse 10, also in radialer Richtung auftritt und sich die Vorsprünge in die äußere Oberfläche 44 der Rohrenden 3, 4 einpressen und damit hohe Axialkräfte, ohne daß es zur einem Ausziehen der Rohrenden 3, 4 aus der Verbindungseinrichtung 1 kommt, aufgenommen werden. Bedingt durch die ballige Oberflächenausbildung kommt es nur zu einer Linienberührung zwischen den Rückhalteelementen 48 und den Verbindungsmuffen 19, 20 und damit zu einer Reibungsverminderung und zu einer verbesserten Spannwirkung.

Die durch die Lippendichtringe 42 gebildete Dichtanordnung 41 gewährleistet eine einwandfreie Abdichtung eines im Inneren des Rohrleitungsstranges 7 erzeugten Überdruckes gegenüber dem Umgebungsdruck, da beim Auftreten einer Druckbelastung - gemäß Pfeil 52 - auf die Dichtlippe 43 diese an die äußere Oberfläche 44 der Rohrenden 3, 4 angepreßt wird.

Damit ist ein gesichertes Montageverfahren für das Einziehen der Datenleitung 8 etc. möglich, bei dem im Rohrleitungsstrang 7 ein Überdruck angelegt wird.

In der Fig. 3 ist vereinfacht eine Ausbildung und an dieser ein Lösevorgang für eine mit einer lösbaren Rastverbindung 32 versehenen Verbindungseinrichtung 1 gezeigt, wobei zur verständlichen Erläuterung eine Ausführung gewählt wurde, bei der der Mittelteil 9 diametral gegenüberliegend jeweils nur mit einer Rastnase 29 versehen ist. Wie in vollen Linien dargestellt, umfaßt die in der Fig. 3 gezeigte Verbindungsmuffe 19 den Mittelteil 9 konzentrisch zur Längsmittelachse 10 im Überlappungsbereich 23, wobei die diametral gegenüberliegend angeordnete Rastnase 29 in Eingriff mit den Aufnahmen 31 steht. Durch die Differenz des inneren Durchmessers 28 der Verbindungsmuffe 19 und des äußeren Durchmessers 26 des Mittelteils 9 besteht ein umlaufender Ringspalt 53. Wird im Überlappungsbereich 23 auf die Verbindungsmuffe 19 in etwa rechtwinkelig zu einer die Rastnase 29 und Aufnahmen 31 aufnehmenden Längssymmetrieebene 54 eine Kraft gemäß aufeinander zuweisender Pfeile 55 ausgeübt, bildet sich eine ovale Querschnittsform der Verbindungsmuffe 19 im Überlappungsbereich 23 aus, wie dies in strichlierten Linien gezeigt ist. Der Ringspalt 53 ist in Abhängigkeit der Höhe 36 der Rastnasen nunmehr dermaßen ausgelegt, daß durch die Annahme einer ovalen Querschnittsform die Rastnase 29 außer Eingriff mit den Aufnahmen 31 kommen. Damit kann die Verbindungsmuffe 19 ohne Verwendung von Lösewerkzeugen vom Mittelteil 9 abgezogen und damit die Rastverbindung 32 gelöst und nach dieser Ausführungsvariante die Verbindungseinrichtung 1 getrennt werden.

An dieser Stelle sei weiters darauf hingewiesen, daß die Rastverbindung 32 auch in einer umgekehrten Anordnung - bei der die Rastnasen 29 in den Verbindungsmuffen 19, 20 nach innen ragend angeordnet sind und entsprechende Aufnahmen in Form von Vertiefungen im Mittelteil 9 vorhanden sind - realisiert werden kann.

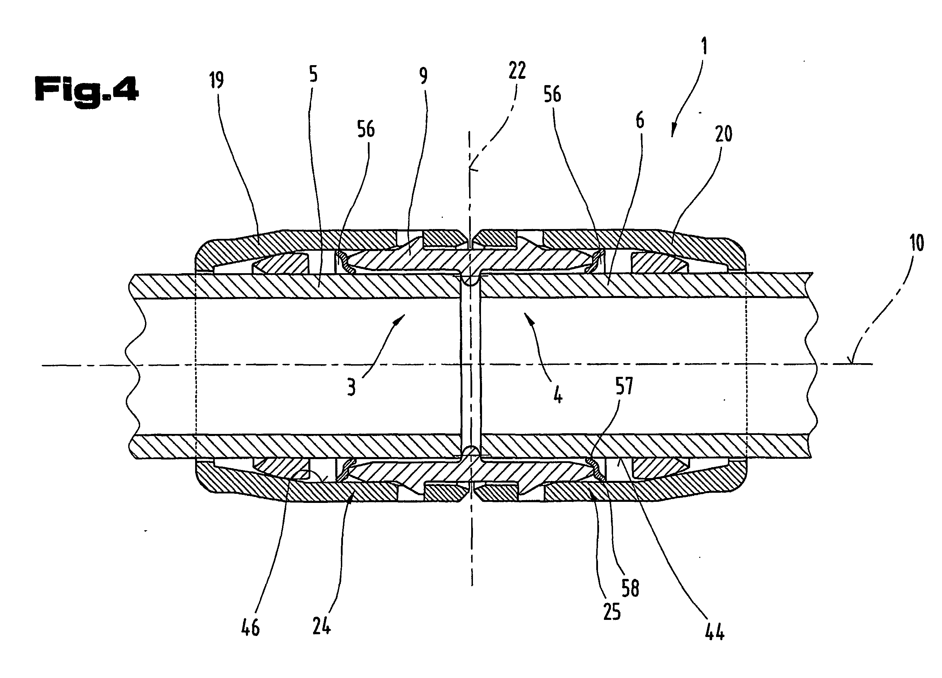

In der Fig. 4 ist eine weitere Ausführung der Verbindungseinrichtung 1 gezeigt. In der Beschreibung werden die bereits in den vorhergehenden Fig. verwendeten Begriffe und Bezugszeichen für gleiche Bauteile weiter verwendet.

Nach dieser Ausbildung ist jedem Stirnendbereich 24, 25 des Mittelteils 9 zugeordnet ein mit dem Mittelteil 9 bewegungsfest verbundenes Dichtelement 56 angeordnet. Diese Dichtelemente 56 sind in einer bevorzugten Ausbildung einstückig am Mittelteil 9 z.B. nach einem sogenannten 2K-Verfahren angeformt, bei dem das Material der Dichtelemente 56 eine gegenüber dem Material des Mittelteils 9 höhere Elastizität aufweist und eine innere Dichtlippe 57 und eine äußere Dichtlippe 58 ausbildet. Im montierten Zustand, bei dem die Rohrenden 3, 4 in den Mittelteil 9 eingeführt und die Verbindungsmuffen 19, 20 mit dem Mittelteil 9 verrastet sind, liegt die innere Dichtlippe 57 dichtend an der Oberfläche 44 der Rohrenden 3, 4 an und die äußere Dichtlippe 58 liegt dichtend an der inneren Oberfläche 46 der Verbindungsmuffen 19, 20 an.

Anstelle der beschriebenen Ausführungsform, bei der das Dichtelement 56 am Mittelteil 9 angeformt ist, kann selbstverständlich auch ein in dieser speziellen Querschnittsform ausgebildetes Dichtelement vorgefertigt sein, das im Stirnendbereich 24, 25 am Mittelteil 9 befestigt, z.B. angeklebt oder angeschweißt ist.

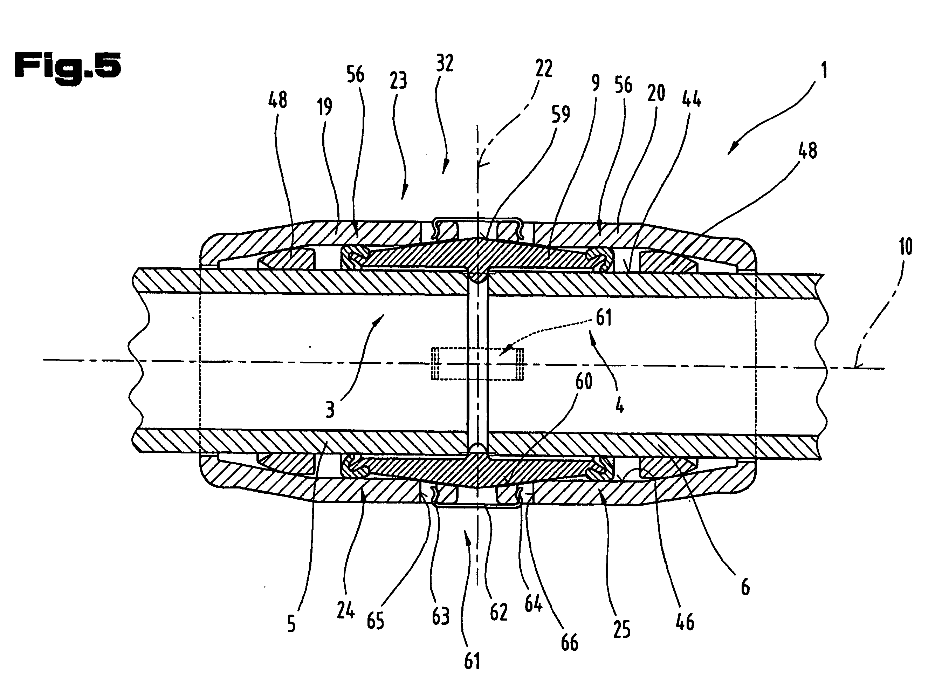

In der Fig. 5 ist eine weitere Ausführung der Verbindungseinrichtung 1 gezeigt. In der Beschreibung werden die bereits in den vorhergehenden Fig. verwendeten Begriffe und Bezugszeichen für gleiche Bauteile weiter verwendet.

Nach dieser Ausführung ist der Mittelteil 9 mit einer in bezug auf die Querebene 22 gegengleich verlaufenden kegelstumpfförmigen äußeren Anlagefläche 59, die sich konisch verjüngend in Richtung der Stirnendbereiche 24, 25 erstreckt, ausgebildet. Die Verbindungsmuffen 19, 20 weisen eine gegengleich geneigte Anlagefläche 60 auf, wodurch sich eine formschlüssige Verbindung ergibt. Die Rastverbindung 32 - nach dieser Ausführung auch in Art einer lösbaren Verbindung - zwischen den den Mittelteil 9 im Überlappungsbereich 23 umfassenden Verbindungsmuffen 19, 20 bildet im gezeigten Ausführungsbeispiel eine Schnapp-Federverbindung 61 mittels einer in etwa U-förmig ausgebildeten Blatt- oder Drahtfeder 62 aus, die mit Schenkeln 63, 64 in entsprechende Aufnahmen 65, 66 der Verbindungsmuffen 19, 20 eingreift und diese spielfrei am Mittelteil 9 haltert. Selbstverständlich ist es möglich, über den Umfang verteilt mehrere derartige Schnapp-Federverbindungen 61 vorzusehen, wobei ein leichtes Lösen der Verbindung gegeben ist.

Die Stirnendbereiche 24, 25 des Mittelteils 9 sind wulstförmig geformt und mit den Dichtelementen 56 versehen. Diese Dichtelemente 56 sind durch eine formschlüssige Gestaltung an die Stirnendbereiche 24, 25 angepaßt und so mit dem Mittelteil 9 in Richtung der Längsmittelachse 10 bewegungsfest gekuppelt. Die Dichtelemente 56 weisen dazu einen etwa C-förmigen Querschnitt auf und umfassen die Stirnendbereiche 24, 25 und stellen eine Abdichtung zwischen der äußeren Oberfläche 44 der Rohrenden 3, 4 und der inneren Oberfläche 46 der Verbindungsmuffen 19, 20 her, wobei insbesondere der der äußeren Oberfläche 44 der Rohrenden 3, 4 zugewandte Bereich der Dichtelemente 56 in Form einer Dichtlippe ausgebildet ist.

In einer alternativen Ausführungsform ist es aber auch möglich, daß die Dichtelemente 38 bzw. die Dichtelemente 56 in ringförmigen, in den Verbindungsmuffen 19, 20 ausgebildeten Nuten angeordnet sind.

Nach einer bevorzugten Ausführungsform sind die die Verbindungseinrichtung 1 bildenden Einzelteile, wie z.B. der Mittelteil 9, Verbindungsmuffen 19, 20 und Rückhalteelemente 48, bevorzugt aus Thermoplast-, Duroplastmaterial etc. insbesondere als Spritzteile, gebildet. Die Dichtelemente sind bevorzugt aus elastomeren Material gebildet, wobei diese aus einem Material mit zum Material des Mittelteils 9 und der Verbindungsmuffen 19, 20 unterschiedlichem Material, insbesondere mit geringerer Shorehärte, bestehen.

Der Ordnung halber sei abschließend darauf hingewiesen, daß zum besseren Verständnis der Verbindungseinrichtung 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Verbindungseinrichtung
- 2: Stoßstelle
- 3: Rohrende
- 4: Rohrende
- 5: Schutzrohr

- 6: Schutzrohr
- 7: Rohrleitungsstrang
- 8: Datenleitung
- 9: Mittelteil
- 10: Längsmittelachse

- 11: Länge
- 12: Innendurchmesser
- 13: Vorsprung
- 14: Rohranschlag
- 15: Stirnfläche

- 16: Durchmesser
- 17: Durchmesser
- 18: Außendurchmesser
- 19: Verbindungsmuffe
- 20: Verbindungsmuffe

- 21: Umfang
- 22: Querebene
- 23: Überlappungsbereich
- 24: Stirnendbereich
- 25: Stirnendbereich

- 26: Durchmesser
- 27: Durchmesser
- 28: Durchmesser
- 29: Rastnase
- 30: Durchbruch

- 31: Aufnahme
- 32: Rastverbindung
- 33: Einführfläche
- 34: Rückhaltefläche
- 35: Wanddicke

- 36: Höhe
- 37: Vertiefung
- 38: Dichtelement
- 39: O-Ring
- 40: Dichtanordnung

- 41: Dichtanordnung
- 42: Lippendichtring
- 43: Dichtlippe
- 44: Oberfläche
- 45: Zwischenraum

- 46: Oberfläche
- 47: Umfangsfläche
- 48: Endbereich
- 49: Rückhalteelement
- 50: Oberfläche

- 51: Pfeil
- 52: Pfeil
- 53: Ringspalt
- 54: Längssymmetrieebene
- 55: Pfeil

- 56: Dichtelement
- 57: Dichtlippe
- 58: Dichtlippe
- 59: Anlagefläche
- 60: Anlagefläche

- 61: Schnapp-Federverbindung
- 62: Blatt- oder Drahtfeder
- 63: Schenkel
- 64: Schenkel
- 65: Aufnahme

- 66: Aufnahme

## Patentansprüche

1. Verbindungseinrichtung (1) für im Bereich einer Stoßstelle (2) koaxial gegenüberliegend zu verbindender Rohrenden (3, 4), insbesondere Schutzrohre (5, 6) für Datenleitungen (8), Lichtleiter, Kabel etc., mit einem die Rohrenden (3, 4) umfaßbaren Mittelteil (9) und mit diesem an entgegengesetzten Stimendbereichen (24, 25) bereichsweise überlappenden und die Rohrenden (3, 4) aufnehmenden Verbindungsmuffen (19, 20) und mit zumindest einer den Rohrenden (3, 4) zugeordneten Dichtungsvorrichtung mit jeweils einem ringförmigen elastisch verformbaren Dichtelement (38, 56) an den Stimendbereichen (24, 25) des Mittelteils (9), welches in Richtung einer Länge (11) des Mittelteils (9) bewegungsfest gehaltert angeordnet ist, **dadurch gekennzeichnet, daß** Dichtelemente (38, 56) zwischen einer inneren Oberfläche (46) der Verbindungsmuffe (19, 20) und einer, einer äußeren Oberfläche (44) der Rohrenden (3, 4) abgewandten Oberfläche des Mittelteils (9) angeordnet sind.

2. Verbindungseinrichtung nach Anspruch 1, **dadurch gekennzeichnet, daß** eine Dichtanordnung (41) zwischen einer äußeren Oberfläche (44) der Rohrenden (3,4) und der inneren Oberfläche (46) der Verbindungsmuffen (19, 20) angeordnet ist.

3. Verbindungseinrichtung nach Anspruch 1 oder 2, **dadurch gekennzeichnet, daß** in den Stirnendbereichen (24, 25) des Mittelteils (9) jeweils zwei Dichtelemente (38) in in Richtung einer Längsmittelachse (10) beabstandeten und in zu dieser senkrecht verlaufenden Ebenen angeordnet sind.

4. Verbindungseinrichtung nach einem oder mehreren der vorhergehenden Ansprüche, **dadurch gekennzeichnet, daß** die Dichtelemente (38, 56) am Mittelteil (9) einstückig angeformt, insbesondere angespritzt sind.

5. Verbindungseinrichtung nach einem oder mehreren der vorhergehenden Ansprüche, **dadurch gekennzeichnet, daß** die Dichtelemente (38, 56) aus einem zum Mittelteil (9) unterschiedlichen Material, insbesondere aus einem Material mit zum Material des Mittelteils (9) geringerer Shorehärte, gebildet sind.

6. Verbindungseinrichtung nach einem oder mehreren der vorhergehenden Ansprüche, **dadurch gekennzeichnet, daß** die Dichtelemente (38) durch O-Ringe (39) gebildet sind.

7. Verbindungseinrichtung nach einem oder mehreren der vorhergehenden Ansprüche, **dadurch gekennzeichnet, daß** die Dichtelemente (38) durch Lippendichtringe (42) gebildet sind.

8. Verbindungseinrichtung nach einem oder mehreren der vorhergehenden Ansprüche, **dadurch gekennzeichnet, daß** die Dichtelemente (38, 56) in ringförmigen, im Mittelteil (9) ausgebildeten nutförmigen Vertiefungen (37) angeordnet sind.

9. Verbindungseinrichtung nach einem oder mehreren der vorhergehenden Ansprüche, **dadurch gekennzeichnet, daß** die Dichtelemente (38, 56) in ringförmigen, in den Verbindungsmuffen (19, 20) ausgebildeten Nuten angeordnet sind.

10. Verbindungseinrichtung nach einem oder mehreren der vorhergehenden Ansprüche, **dadurch gekennzeichnet, daß** die Verbindungsmuffen (19, 20) mit dem Mittelteil (9) über eine durch eine Rastverbindung (32) gebildete Kupplungsanordnung bewegungsfest gekoppelt sind.

11. Verbindungseinrichtung nach einem oder mehreren der vorhergehenden Ansprüche, **dadurch gekennzeichnet, daß** am Mittelteil (9) einen äußeren Umfang (21) überragend zumindest diametral gegenüberliegend je eine Rastnase (29) angeordnet ist.

12. Verbindungseinrichtung nach einem oder mehreren der vorhergehenden Ansprüche, **dadurch gekennzeichnet, daß** in den Verbindungsmuffen (19, 20) zumindest eine Aufnahme (31) für die Rastnase (29) angeordnet ist.

13. Verbindungseinrichtung nach einem oder mehreren der vorhergehenden Ansprüche, **dadurch gekennzeichnet, daß** die Verbindungsmuffen (19, 20) mit zumindest einer eine innere Oberfläche (46) in Richtung der Längsmittelachse (10) überragenden Rastnase (29) versehen sind.

14. Verbindungseinrichtung nach einem oder mehreren der vorhergehenden Ansprüche, **dadurch gekennzeichnet, daß** der Mittelteil (9) zumindest eine Aufnahme für die Rastnase (29) der Verbindungsmuffe (19; 20) aufweist.

15. Verbindungseinrichtung nach einem oder mehreren der vorhergehenden Ansprüche, **dadurch gekennzeichnet, daß** die Kupplungsanordnung durch eine Schraubverbindung gebildet ist.

16. Verbindungseinrichtung nach einem oder mehreren der vorhergehenden Ansprüche, **dadurch gekennzeichnet, daß** die Kupplungsanordnung durch eine Klebe- und/oder Schweißverbindung gebildet ist.

17. Verbindungseinrichtung nach einem oder mehreren der vorhergehenden Ansprüche, **dadurch gekennzeichnet, daß** die Kupplungsanordnung durch eine Schnapp- Federverbindung (61) gebildet ist.

18. Verbindungseinrichtung nach einem oder mehreren der vorhergehenden Ansprüche, **dadurch gekennzeichnet, daß** zwischen der äußeren Oberfläche (44) der Rohrenden (3, 4) und der inneren Oberfläche (46) der Verbindungsmuffen (19, 20) Rückhalteelemente (49) angeordnet sind.

19. Verbindungseinrichtung nach einem oder mehreren der vorhergehenden Ansprüche, **dadurch gekennzeichnet, daß** die Rückhalteelemente (49) durch die Rohrenden (3, 4) umfassende Klemmringe gebildet sind.

20. Verbindungseinrichtung nach einem oder mehreren der vorhergehenden Ansprüche, **dadurch gekennzeichnet, daß** eine äußere Oberfläche (50) der Rückhalteelemente (49) kegelstumpfförmig verläuft und die Rückhalteelemente (49) einer inneren, den Rohrenden (3, 4) zugewandten Oberfläche (49) mit den Reibungskoeffizienten erhöhenden Mitteln versehen ist.

21. Verbindungseinrichtung nach einem oder mehreren der vorhergehenden Ansprüche, **dadurch gekennzeichnet, daß** etwa im Mittel der Länge (11) des Mittelteils (9) ein Rohranschlag (14) angeordnet ist.

22. Verbindungseinrichtung nach einem oder mehreren der vorhergehenden Ansprüche, **dadurch gekennzeichnet, daß** der Mittelteil (9) und die Verbindungsmuffen (19, 20) bevorzugt aus einem Thermoplast- oder Duroplast-Material gebildet sind.

23. Verbindungseinrichtung nach einem oder mehreren der vorhergehenden Ansprüche, **dadurch gekennzeichnet, daß** die Dichtelemente (38, 56) bevorzugt aus einem elastomeren Material gebildet sind.

24. Verbindungseinrichtung nach einem oder mehreren der vorhergehenden Ansprüche, **dadurch gekennzeichnet, daß** die Rückhalteelemente (49) bevorzugt aus einem Thermoplast- oder Duroplast-Material gebildet sind.

## Claims

1. Coupling device (1) for coaxial, oppositely lying conduit ends (3, 4) to be joined to one another in the region of a junction (2), in particular cable conduits (5,6) for data cables (8), conductors, cabling, etc., comprising a middle part (9) which can be placed around the conduit ends (3, 4), and, overlapping certain regions of it at the opposite end face regions (24, 25), coupling sleeves (19, 20) to accommodate the conduit ends (3, 4), and at least one sealing device co-operating with at least one of the conduit ends (3, 4) having an annular, elastically deformable sealing element (38, 56) on each of the end face regions (24, 25) of the middle part (9) retained so as to be immobilised in the direction of a length (11) of the middle part (9), **characterised in that** sealing elements (38, 56) are provided between an internal surface (46) of the coupling sleeve (19, 20) and a surface of the middle part (9) remote from an external surface (44) of the conduit ends (3, 4).

2. Coupling device as claimed in claim 1, **characterised in that** a sealing system (41) is disposed between an external surface (44) of the conduit ends (3, 4) and the internal surface (46) of the coupling sleeves (19, 20).

3. Coupling device as claimed in claim 1 or 2, **characterised in that** two sealing elements (38) are provided respectively in the end face regions (24, 25) of the middle part (9), spaced apart in the direction of a longitudinal mid-axis (10) and extending in planes perpendicular thereto.

4. Coupling device as claimed in one or more of the preceding claims, **characterised in that** the sealing elements (38, 56) are integrally moulded onto the middle part (9), in particular injection-moulded.

5. Coupling device as claimed in one or more of the preceding claims, **characterised in that** the sealing elements (38, 56) are made from a different material than the middle part (9), in particular from a material with a lower Shore hardness than the material of the middle part (9).

6. Coupling device as claimed in one or more of the preceding claims, **characterised in that** the sealing elements (38) are O-rings (39).

7. Coupling device as claimed in one or more of the preceding claims, **characterised in that** the sealing elements (38) are lip-type sealing rings (42).

8. Coupling device as claimed in one or more of the preceding claims, **characterised in that** the sealing elements (38, 56) are disposed in annular groove-shaped recesses (37) provided in the middle part (9).

9. Coupling device as claimed in one or more of the preceding claims, **characterised in that** the sealing elements (38, 56) are disposed in annular grooves provided in the coupling sleeves (19, 20).

10. Coupling device as claimed in one or more of the preceding claims, **characterised in that** the coupling sleeves (19, 20) are coupled with the middle part (9) and immobilised by means of a coupling system comprising a catch connection (32).

11. Coupling device as claimed in one or more of the preceding claims, **characterised in that** an external periphery (21) is provided on the middle part (9) and projects out at least diametrically opposite each respective catch lug (29).

12. Coupling device as claimed in one or more of the preceding claims, **characterised in that** at least one seating (31) is provided in the coupling sleeves (19, 20) for the catch lug (29).

13. Coupling device as claimed in one or more of the preceding claims, **characterised in that** the coupling sleeves (19, 20) are provided with at least one catch lug (29) projecting out beyond an internal surface (46) in the direction towards the longitudinal mid-axis (10).

14. Coupling device as claimed in one or more of the preceding claims, **characterised in that** the middle part (9) has at least one seating for the catch lug (29) of the coupling sleeve (19; 20).

15. Coupling device as claimed in one or more of the preceding claims, **characterised in that** the coupling system is a screw connection.

16. Coupling device as claimed in one or more of the preceding claims, **characterised in that** the coupling system is a bonded and/or fusion-welded joint.

17. Coupling device as claimed in one or more of the preceding claims, **characterised in that** the coupling system is a snap-in spring connection (61).

18. Coupling device as claimed in one or more of the preceding claims, **characterised in that** retaining elements (49) are provided between the external surface (44) of the conduit ends (3, 4) and the internal surface (46) of the coupling sleeves (19, 20).

19. Coupling device as claimed in one or more of the preceding claims, **characterised in that** the retaining elements (49) are clamping rings engaging round the conduit ends (3, 4).

20. Coupling device as claimed in one or more of the preceding claims, **characterised in that** an external surface (50) of the retaining elements (49) extends in a truncated cone shape and the retaining elements (49) of an internal surface (49) directed towards the conduit ends (3, 4) has means to increase the coefficient of friction.

21. Coupling device as claimed in one or more of the preceding claims, **characterised in that** a conduit stop (14) is disposed more or at the centre of the length (11) of the middle part (9).

22. Coupling device as claimed in one or more of the preceding claims, **characterised in that** the middle part (9) and the coupling sleeves (19, 20) are preferably made from a thermoplastic or thermosetting plastic material.

23. Coupling device as claimed in one or more of the preceding claims, **characterised in that** the sealing elements (38, 56) are preferably made from an elastomer material.

24. Coupling device as claimed in one or more of the preceding claims, **characterised in that** the retaining elements (49) are preferably made from a thermoplastic or thermosetting plastic material.

## Revendications

1. Dispositif d'assemblage (1) pour des extrémités de tube à relier (3, 4) opposées coaxialement au voisinage d'un emplacement de joint (2), en particulier de tubes de protection (5, 6) pour des lignes de données (8), des conducteurs de lumière, des cables, etc. avec une partie médiane (9) apte à entourer les extrémités de tube (3, 4) et avec des manchons d'assemblage (19, 20) chevauchant celle-ci aux zones d'extrémité frontales opposées (24, 25) par zones et recevant les extrémités de tube (3, 4), et avec au moins un dispositif d'étanchéité associé aux extrémités de tube (3, 4) avec respectivement un élément d'étanchéité annulaire, déformable élastiquement (38, 56) aux zones d'extrémité frontales (24, 25) de la partie médiane (9), qui est disposé pour être retenu d'une manière non déplaçable dans la direction d'une longueur (11) de la partie médiane (9), **caractérisé en ce que** des éléments d'étanchéité (38, 56) sont disposés entre une surface interne (46) du manchon d'assemblage (19, 20) et une surface de la partie médiane (9) éloignée d'une surface externe (44) des extrémités de tube (3, 4).

2. Dispositif d'assemblage selon la revendication 1, **caractérisé en ce qu'**un agencement d'étanchéité (4 1 ) est disposé entre une surface externe (44) des extrémités de tube (3, 4) et la surface interne (46) des manchons d'assemblage (19, 20).

3. Dispositif d'assemblage selon la revendication 1 ou 2, **caractérisé en ce que** sont disposés dans les zones d'extrémité frontales (24, 25) de la partie médiane (9) respectivement deux éléments d'étanchéité (38) dans des plans espacés dans la direction d'un axe médian longitudinal (10) et s'étendant perpendiculairement à celui-ci.

4. Dispositif d'assemblage selon l'une ou plusieurs des revendications précédentes, **caractérisé en ce que** les éléments d'étanchéité (38, 56) sont rapportés par formage à la partie médiane (9) en une pièce, en particulier sont rapportés par moulage.

5. Dispositif d'assemblage selon l'une ou plusieurs des revendications précédentes, **caractérisé en ce que** les éléments d'étanchéité (38, 56) sont réalisés en un matériau différent de la partie médiane (9), en particulier en un matériau d'une dureté Shore plus réduite relativement au matériau de la partie médiane (9).

6. Dispositif d'assemblage selon l'une ou plusieurs des revendications précédentes, **caractérisé en ce que** les éléments d'étanchéité (38) sont formés par des joints toriques (39).

7. Dispositif d'assemblage selon l'une ou plusieurs des revendications précédentes, **caractérisé en ce que** les éléments d'étanchéité (38) sont formés par des bagues d'étanchéité à lèvre (42).

8. Dispositif d'assemblage selon l'une ou plusieurs des revendications précédentes, **caractérisé en ce que** les éléments d'étanchéité (38, 56) sont disposés dans des creux annulaires en forme de rainure (37), réalisés dans la partie médiane (9).

9. Dispositif d'assemblage selon l'une ou plusieurs des revendications précédentes, **caractérisé en ce que** les éléments d'étanchéité (38, 56) sont disposés dans des rainures annulaires, ménagées dans les manchons d'assemblage (19, 20).

10. Dispositif d'assemblage selon l'une ou plusieurs des revendications précédentes, **caractérisé en ce que** les manchons d'assemblage (19, 20) sont couplés de manière non déplaçable avec la partie médiane (9) par un agencement de couplage formé par une liaison à encliquetage (32).

11. Dispositif d'assemblage selon l'une ou plusieurs des revendications précédentes, **caractérisé en ce qu'**à la partie médiane (9), en faisant saillie sur un pourtour extérieur (21), au moins respectivement un ergot d'encliquetage (29) opposé diamétralement est disposé.

12. Dispositif d'assemblage selon l'une ou plusieurs des revendications précédentes, **caractérisé en ce qu'**il est disposé dans les manchons d'assemblage (19, 20) au moins un logement (31) pour l'ergot d'encliquetage (29).

13. Dispositif d'assemblage selon l'une ou plusieurs des revendications précédentes, **caractérisé en ce que** les manchons d'assemblage (19, 20) sont pourvus au moins d'un ergot d'encliquetage (29) faisant saillie sur une surface interne (46) en direction de l'axe médian longitudinal (10).

14. Dispositif d'assemblage selon l'une ou plusieurs des revendications précédentes, **caractérisé en ce que** la partie médiane (9) présente au moins un logement pour l'ergot d'encliquetage (29) du manchon d'assemblage (19; 20).

15. Dispositif d'assemblage selon l'une ou plusieurs des revendications précédentes, **caractérisé en ce que** l'agencement de couplage est formé par un assemblage par vis.

16. Dispositif d'assemblage selon l'une ou plusieurs des revendications précédentes, **caractérisé en ce que** l'agencement de couplage est formé par un assemblage par collage et/ou soudage.

17. Dispositif d'assemblage selon l'une ou plusieurs des revendications précédentes, **caractérisé en ce que** l'agencement de couplage est formé par un assemblage à ressort à déclic (61).

18. Dispositif d'assemblage selon l'une ou plusieurs des revendications précédentes, **caractérisé en ce que** sont disposés entre la surface externe (44) des extrémités de tube (3, 4) et la surface interne (46) des manchons d'assemblage (19, 20) des éléments de retenue (49).

19. Dispositif d'assemblage selon l'une ou plusieurs des revendications précédentes, **caractérisé en ce que** les éléments de retenue (49) sont formés par des bagues de serrage entourant les extrémités de tube (3, 4).

20. Dispositif d'assemblage selon l'une ou plusieurs des revendications précédentes, **caractérisé en ce qu'**une surface externe (50) des éléments de retenue (49) s'étend en forme de cône tronqué, et que les éléments de retenue (49) d'une surface interne (49) orientée vers les extrémités de tube (3, 4) sont pourvus de moyens augmentant le coefficient de friction.

21. Dispositif d'assemblage selon l'une ou plusieurs des revendications précédentes, **caractérisé en ce qu'**il est disposé à peu près au milieu de la longueur (11) de la partie médiane (9) une butée de tube (14).

22. Dispositif d'assemblage selon l'une ou plusieurs des revendications précédentes, **caractérisé en ce que** la partie médiane (9) et les manchons d'assemblage (19, 20) sont réalisés de préférence en un matériau thermoplastique ou thermodurcissable.

23. Dispositif d'assemblage selon l'une ou plusieurs des revendications précédentes, **caractérisé en ce que** les éléments d'étanchéité (38, 56) sont réalisés de préférence en un matériau élastomère.

24. Dispositif d'assemblage selon l'une ou plusieurs des revendications précédentes, **caractérisé en ce que** les éléments de retenue (49) sont réalisés de préférence en un matériau thermoplastique ou thermodurcissable.
